# EUROPÄISCHE PATENTSCHRIFT

(11) **EP 3 094 873 B1**
(45) Veröffentlichungstag und Bekanntmachung des Hinweises auf die Patenterteilung: **27.03.2019**
(21) Anmeldenummer: 15700560.4
(22) Anmeldetag: 13.01.2015
(51) Int. Cl.: F16C 32/06, F16C 17/02

(54) **HYDRODYNAMISCHES GLEITLAGER**
HYDRODYNAMIC PLAIN BEARING
PALIER LISSE HYDRODYNAMIQUE

(30) Priorität: 15.01.2014 DE 102014200594
(43) Veröffentlichungstag der Anmeldung: 23.11.2016
(73) Patentinhaber: Voith Patent GmbH, 89522 Heidenheim (DE)
(72) Erfinder: ALTHAUS, Josef, 87538 Fischen (DE); KEMPTER, Ulrich, 87545 Burgberg (DE); FUCHS, Andreas, 87459 Pfronten-Ried (DE)
(86) Internationale Anmeldenummer: PCT/EP2015/050498
(87) Internationale Veröffentlichungsnummer: WO 2015/107048

(56) Entgegenhaltungen:
- CH-A- 375 956
- DE-A1- 3 426 559
- DE-A1-102011 005 467
- DE-T2- 69 529 432
- US-A- 3 743 367
- US-A1- 2010 166 347

## Beschreibung

Die vorliegende Erfindung betrifft ein hydrodynamisches Gleitlager, das als sogenanntes Lager mit Mehrkeilbohrung ausgeführt ist, im Einzelnen gemäß dem Oberbegriff von Anspruch 1.

Gattungsgemäße hydrodynamische Gleitlager, wie beispielsweise in US 3201183 A1 gezeigt, die in der Regel als Radiallager mit Mehrkeilbohrung ausgeführt sind, jedoch auch als Radial-Axial-Lager mit Mehrkeilbohrung ausgeführt sein können, weisen eine Vielzahl von in Umfangsrichtung der Lagerschale hintereinander angeordnete Flächensegmente der Lagerfläche auf, welche mit der äußeren im Querschnitt kreisrunden Oberfläche der zu lagernden Welle, des zu lagernden Zapfen oder dergleichen einen konvergierenden Spalt beziehungsweise konvergierende Spalte ausbildet, um im unbelasteten oder niedrig belasteten Zustand Tragdrücke im Schmierspalt auszubilden, welche die Welle zentrieren. Ein Radiallager mit Mehrkeilbohrung ist beispielsweise das sogenannte Zitronenspiellager, auch Lager mit Zweikeilbohrung genannt, bei welchem die Lagerfläche zwei Flächensegmente aufweist, deren innerer Umfang jeweils ein Kreissegment mit einem Radius R bildet, wobei der Mittelpunkt jedes Kreissegments gegenüber einem Mittelpunkt der Lagerschale jeweils um eine Exzentrizität, auch Herstellungs-Exzentrizität genannt, verschoben ist. Die Verschiebung ist dabei derart entgegengesetzt, beispielsweise innerhalb einer vertikalen Ebene durch den Mittelpunkt der Lagerschale, dass die beiden Kreissegmente um die zweifache Exzentrizität aufeinander zugeschoben sind. Hieraus ergibt sich ein Lagerspalt zwischen der äußeren Oberfläche der Welle und der inneren Lagerfläche der Lagerschale, der ausgehend von der Ebene des Versatzes in Umfangsrichtung zu einer Ebene senkrecht hierzu sich zunehmend erweitert.
Man spricht dabei auch von einer Profilierung des Lagers, wobei die Profilierung definiert ist als Differenz zwischen dem genannten Radius R der Flächensegmente und dem äußeren Radius der Welle, normiert mit dem beziehungsweise geteilt durch den äußeren Radius der Welle. Anstelle des äußeren Radius der Welle kann als Bezugsradius auch der Radius eines in die Lagerfläche eingepassten Kreises verwendet werden.

Herkömmliche Zitronenspiellager weisen den Nachteil einer stark orthotropen dynamischen Eigenschaft auf, das heißt sie weisen zwar in der Hauptlastrichtung eine hohe Steifigkeit und eine hohe Lagerdämpfung auf, jedoch in abweichenden Richtungen eine deutlich geringere Lagersteifigkeit und Dämpfung.

Der vorliegenden Erfindung liegt die Aufgabe zugrunde, ein hydrodynamisches Gleitlager mit der Bauform einer Mehrkeilbohrung anzugeben, dessen orthotropen dynamischen Eigenschaften weniger stark ausgebildet sind und das eine bessere relative Lagerdämpfung, das heißt eine bessere Dämpfung bezogen auf die Steifigkeit aufweist.

Die erfindungsgemäße Aufgabe wird durch ein hydrodynamisches Gleitlager mit den Merkmalen von Anspruch 1 gelöst. In den abhängigen Ansprüchen sind vorteilhafte und besonders zweckmäßige Ausgestaltungen der Erfindung angegeben.

Das erfindungsgemäße hydrodynamische Gleitlager ist als versetztes Mehrkeilbohrungslager ausgeführt. Demgemäß sind die kreissegmentförmigen Flächensegmente nicht nur mit ihrem Mittelpunkt, bezogen auf den Radius R des jeweiligen Kreissegments, gegenüber dem Mittelpunkt der Lagerschale, durch welchen die Längsachse der Lagerschale verläuft, verschoben, wie dies beispielsweise bei Zitronenspiellagern der Fall ist, sondern wenigstens ein Flächensegment ist ferner entlang einer Versatzebene mit einem Versatz e relativ zu dem Mittelpunkt der Lagerschale verschoben, sodass wenigstens zwei Flächensegmente relativ zueinander oder ein erstes Flächensegment relativ zu einer Gruppe weiterer Flächensegmente oder eine erste Gruppe Flächensegmente relativ zu einer zweiten Gruppe Flächensegmente entlang dieser Versatzebene verschoben ist.

Hierdurch kann beispielsweise eine deutlich geringere Profilierung als bei einem herkömmlichen Zitronenlager erreicht werden und die relative Lagerdämpfung wird verbessert. Zugleich nehmen orthotrope dynamische Eigenschaften ab.

Im Einzelnen weist ein erfindungsgemäßes hydrodynamisches Gleitlager eine Lagerschale mit einer inneren Oberfläche auf, die eine Lagerfläche für eine umlaufende Welle oder dergleichen ausbildet. Anstelle einer umlaufenden Welle kann auch ein anderes Bauteil mit einer in der Regel zylinderförmigen äußeren Oberfläche in der Lagerschale unter Ausbildung eines Lagerspalts aufgenommen sein, beispielsweise ein Zapfen einer umlaufenden Konstruktion.

Die Lagerfläche ist zur Ausbildung eines Lagers mit sogenannter Mehrkeilbohrung mit einer Vielzahl von in Umfangsrichtung der Lagerschale hintereinander angeordneten Flächensegmenten versehen. Die Flächensegmente bilden in einem Querschnitt durch die Längsachse der Lagerschale auf ihrer inneren Oberfläche jeweils ein Kreissegment mit einem Radius R aus, dessen Mittelpunkt gegenüber einem Mittelpunkt der Lagerschale jeweils um eine Exzentrizität d verschoben ist. Bildlich kann man sich die Herstellung einer solchen Lagerfläche dadurch vorstellen, dass aus einem Kreis mit dem Radius R Sektoren ausgeschnitten und entfernt werden und die verbleibenden Segmente aufeinander zu geschoben werden, bis sie sich an ihren Enden mit einer Art Abwinklung, Unstetigkeit oder einem Knick berühren und auf einem Kreis mit einem kleineren Radius positioniert sind. Dieser Kreis ist der eingangs genannte eingepasste Kreis mit dem Bezugsrdius. Anstelle der Beschreibung mit einem Kreissegment im Querschnitt durch die Längsachse der Lagerschale können die Flächensegmente auch als Zylindersegmente bezeichnet werden.

Erfindungsgemäß weist die Lagerschale zwei Lagerschalenhälften auf, die jeweils einteilig oder mehrteilig ausgeführt sind, und die sich jeweils über 180° der Lagerfläche erstrecken und an einer Teilfuge, die innerhalb einer Teilfugenebene verläuft, zusammengefügt sind.

Erfindungsgemäß ist nun wenigstens ein Flächensegment zusätzlich entlang einer Versatzebene mit einem Versatz e relativ zu dem Mittelpunkt der Lagerschale versetzt, wobei die Versatzebene in Umfangsrichtung der Lagerschale winklig auf der Teilfugenebene steht.

Vorteilhaft ist in die Lagerschale eine Vielzahl von Ölbohrungen eingebracht, die zumindest teilweise oder vollständig in Radialrichtung verlaufen und eine ölleitende Verbindung zwischen dem äußeren Umfang der Lagerschale und der Lagerfläche herstellen. Beispielsweise ist auf entgegengesetzten Seiten der Lagerfläche jeweils eine Ölbohrung vorgesehen, die sich demnach in Umfangsrichtung gegenüberliegen, wobei sich diese beiden Ölbohrungen in der Teilfugenebene entlang der Teilfuge erstrecken.

Günstig ist es, wenn eine, mehrere oder alle Ölbohrungen eine Mündung in der Lagerfläche aufweisen, die von einer in die Lagerfläche eingebrachten Schmiertasche umschlossen wird. Beispielsweise mündet die oder jede Ölbohrung in Umfangsrichtung der Lagerfläche jeweils in einer Mitte der sie umschließenden Schmiertasche.

Gemäß einer Ausführungsform der Erfindung ist die oder jede Versatzebene außerhalb der Schmiertasche der Ölbohrungen positioniert, die sich entlang der Teilfuge erstrecken.

Eine Ausführungsform der Erfindung sieht vor, dass über dem Umfang der Lagerfläche hintereinander genau drei Ölbohrungen vorgesehen sind. Dies schließt nicht aus, dass nebeneinander mehr als eine Ölbohrung auf einem gemeinsamen Umfangswinkel vorgesehen sind.

Beispielsweise weist die Lagerfläche ein (erstes) Flächensegment mit einem Umfangswinkel von 180° auf. Die beiden Umfangsenden dieses Flächensegments können dann beispielsweise in der Versatzebene liegen. Günstig ist, wenn ferner ein zweites Flächensegment einen Umfangswinkel von 110° bis 140°, insbesondere von 130° oder 120° aufweist, und ein drittes Flächensegment einen Umfangswinkel von 40° bis 70°, insbesondere von 50° oder 60° aufweist. Das zweite und das dritte Flächensegment können dann gemeinsam entlang der Versatzebene gegenüber dem ersten Flächensegment verschoben sein.

Die Versatzebene kann die einzige vorgesehene Versatzebene sein. Ein Winkel in Umfangsrichtung zwischen der Teilfuge und der Versatzebene kann beispielsweise 20° bis 60° betragen.

Die Exzentrizitäten d zwischen dem Mittelpunkt des jeweiligen Kreissegments und dem Mittelpunkt der Lagerschale stehen beispielsweise senkrecht auf der Teilfugenebene, wie sich später noch aus der Figurenbeschreibung ergibt.

In die Lagerfläche kann eine oder können mehrere sich in Umfangsrichtung erstreckende Ölnut(en) vorgesehen sein, die sich insbesondere nur über einen Teil der Breite der Lagerfläche, in Axialrichtung der Lagerschale gesehen, erstrecken, wobei die Breite der Ölnuten insbesondere geringer als die Breite der Schmiertaschen ist.

Eine Ausführungsform sieht vor, dass durch wenigstens eine solche Ölnut ein sogenannter Druckdamm ausgebildet wird, dass heißt ein Vorsprung in Radialrichtung der Lagerschale auf der Lagerfläche, gegen welchen das Öl beim Drehen der Welle strömt.

Die Erfindung soll nachfolgend anhand eines Ausführungsbeispiels und den Figuren exemplarisch beschrieben werden.

Es zeigen:
- Figur 1: eine exemplarische schräge Draufsicht auf ein erfindungsgemäßes hydrodynamisches Gleitlager;
- Figur 2: eine schematische teilweise geschnittene Ansicht auf die Lagerfläche des Lagers aus der Figur 1;
- Figur 3: eine schematische Darstellung der Flächensegmentierung der Lagerfläche des Lagers aus den Figuren 1 und 2;
- Figur 4: eine deutlich überhöht dargestellte schematische Ansicht des Versatzes der Flächensegmente relativ zum Mittelpunkt der Lagerschale;
- Figur 5: ein weiteres Ausführungsbeispiel eines erfindungsgemäßen hydrodynamischen Gleitlagers mit einer anderen Segmentaufteilung.

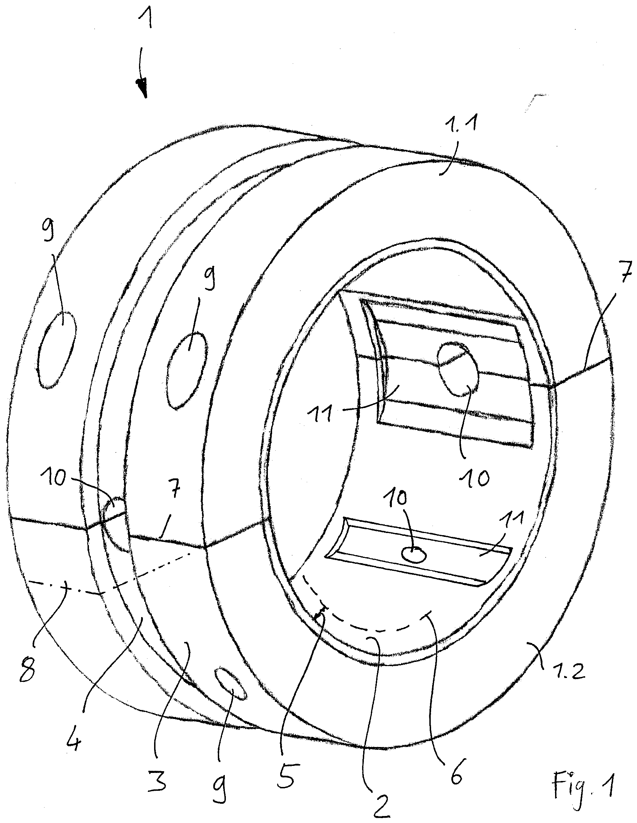

In der Figur 1 ist ein Ausführungsbeispiel für ein erfindungsgemäßes hydrodynamisches Gleitlager dargestellt mit einer Lagerschale 1, die auf ihrem inneren Umfang eine Lagerfläche 2 ausbildet und einen hier im Wesentlichen zylindrischen äußeren Umfang 3 mit einem eingebrachten Ringkanal 4 zur Schmieröl- und/oder Kühlölversorgung des Lagerspaltes 5 aufweist, der zwischen der Lagerfläche 2 und dem äußeren Umfang einer hier nur schematisch angedeuteten Welle 6, die durch das hydrodynamische Gleitlager gelagert ist, ausgebildet ist.

Die Lagerschale 1 besteht im gezeigten Ausführungsbeispiel aus zwei Lagerschalenhälften 1.1, 1.2, die sich jeweils über 180° der Lagerfläche 2 beziehungsweise des äußeren Umfangs 3 erstrecken und an einer Teilfuge 7, die in einer Telfugenebene 8 verläuft, zusammengefügt sind. Die beiden Lagerschalenhälften 1.1, 1.2 sind beispielsweise über Verschraubungen 9 miteinander verschraubt.

In Radialrichtung der Lagerschale 1 sind drei Ölbohrungen 10 eingebracht, welche eine ölleitende Verbindung zwischen dem äußeren Umfang 3 und der Lagerfläche 2 herstellen. Die Mündung jeder Ölbohrung 10 in der Lagerfläche 2 ist von einer Schmiertasche 11 umschlossen, die als Aussparung in die Lagerfläche 2 eingebracht ist. Auf dem äußeren Umfang 3 münden die Ölbohrungen 10 im Ringkanal 4.

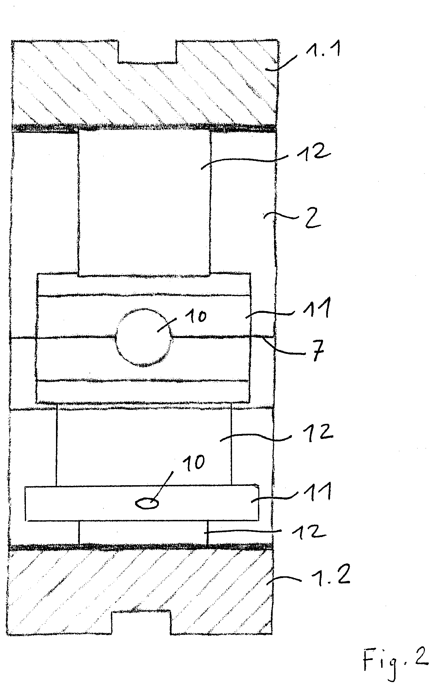

In der Figur 2 ist eine Draufsicht von innen auf die Lagerfläche 2 dargestellt. Neben den auch in der Figur 1 ersichtlichen Schmiertaschen 11 mit den Ölbohrungen 10 erkennt man in die Lagerfläche 2 eingebrachte Ölnuten 12, die sich in Umfangsrichtung über einen Teil der Breite (welche der Axialrichtung des Lagers entspricht) erstrecken. Die Ölnuten 12 können relativ zueinander eine verschiedene Breite aufweisen und/oder relativ zu den Schmiertaschen 11. Dies ist jedoch nicht zwingend. Die Ölnuten 12 können sich ausgehend jeweils von einer ersten Schmiertasche 11 bis zu einer zweiten Schmiertasche 11 erstrecken, was jedoch ebenfalls nicht zwingend ist. Die Ölbohrungen 10 können insbesondere verschiedene Durchmesser aufweisen, beispielsweise weisen die Ölbohrungen 10, die innerhalb der Teilfuge 7 positioniert sind, einen größeren Durchmesser als die verbleibende Ölbohrung 10 auf, die dann jedoch insbesondere in einer Schmiertasche 11 mit der vergleichsweise größten axialen Breite mündet. Zwischen dieser Schmiertasche 11 und der in Umfangsrichtung in Drehrichtung der Welle 6 folgenden Schmiertasche 11 ist insbesondere die vergleichsweise breiteste Ölnut 12 vorgesehen, so wie beispielhaft in der Figur 2 dargestellt ist.

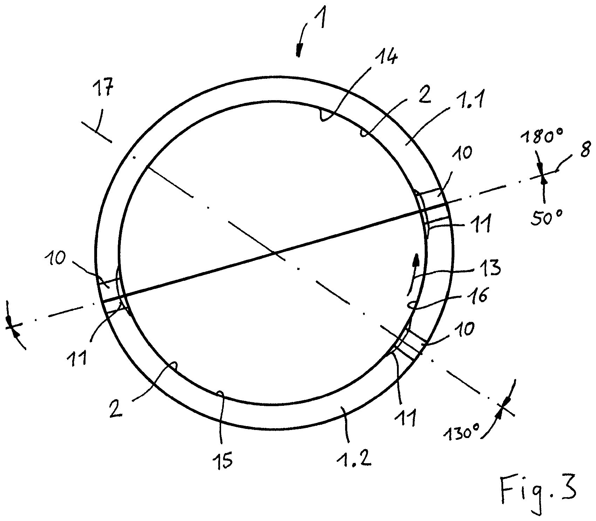

Wie man aus der Figur 3 in Zusammenschau mit der Figur 2 erkennen kann, ist diese vergleichsweise breiteste Schmiertasche 12 beispielsweise in Drehrichtung der Welle 6 (Figur 1) gesehen, die in der Figur 3 mit dem Pfeil 13 angedeutet wird, vor beziehungsweise zu Beginn des kleinsten Flächensegments positioniert, welches vorliegend als drittes Flächensegment 16 bezeichnet wird. Dieses dritte Flächensegment 16 weist beispielsweise, wie in der Figur 3 dargestellt ist, einen Umfangswinkel von 50° auf. Dem dritten Flächensegment 13 folgt in Drehrichtung 13 der Welle 6 (in der Figur 1 dargestellt) ein erstes Flächensegment 14, das sich in dem gezeigten Ausführungsbeispiel über einen Umfangswinkel von 180° erstreckt, und ein zweites Flächensegment 15, das sich in dem gezeigten Ausführungsbeispiel über einen Umfangswinkel von 130° erstreckt.

Bei dem hier dargestellten Ausführungsbeispiel wird die gesamte erste Lagerschalenhälfte 1.1 auf der Lagerfläche 2 durch das erste Flächensegment 14 gebildet. Die Lagerfläche 2 der zweiten Lagerschalenhälfte 1.2 wird hingegen durch das zweite Flächensegment 15 und das dritte Flächensegment 16 gebildet.

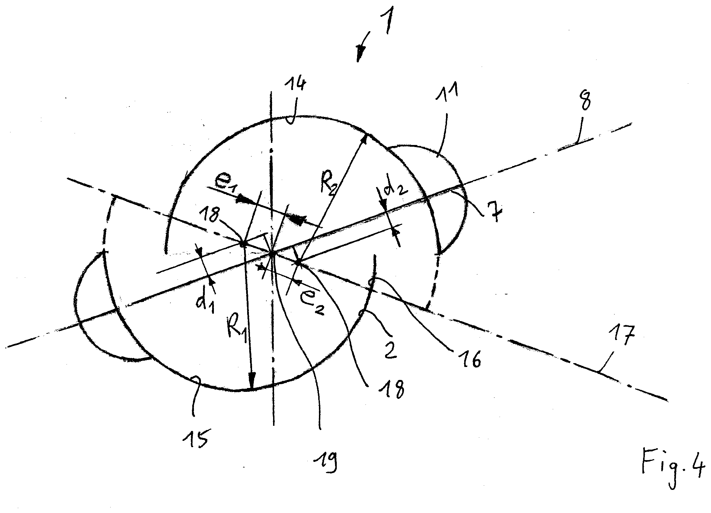

Beachtlich in dem gezeigten Ausführungsbeispiel ist, dass eine Versatzebene 17, auf welche anhand der Figur 4 noch näher eingegangen wird, winklig zur Teilfugenebene 8 positioniert ist, insbesondere 10° oder 20° bis 60° hierzu geneigt.

Die in der Figur 3 dargestellte, im Betrieb weniger belastete erste Lagerschalenhälfte 1.1 ist niedriger profiliert als die zweite Lagerschalenhälfte 1.2, was bedeutet, dass der Flächensegmentradius (Radius des durch das Flächensegment ausgebildete Kreissegments) deutlich größer als der Bezugsradius ist, der beispielsweise durch den Außenradius der Welle 6 oder durch den Radius eines theoretisch in die Lagerfläche 2 eingepassten Kreisrings definiert wird. Beispielsweise ist die weniger belastete Lagerschalenhälfte dreibis fünfmal stärker profiliert als die vergleichsweise höher belastete Lagerschalenhälfte.

In der Figur 4 ist nochmals die Teilfuge 7 mit der Teilfugenebene 8 und den beiden nicht maßstäblich dargestellten Schmiertaschen 11 in der Teilfugenebene 8 dargestellt. Ferner ist der Radius R der Flächensegmente beziehungsweise des durch diese auf der Innenseite gebildeten Kreissegments eingetragen. Der Radius eines Flächensegments beziehungsweise der Flächensegmente 15, 16 ist mit R₁ bezeichnet, der Radius des anderen Flächensegments mit R₂. Der Mittelpunkt des jeweiligen Kreissegments (beider Lagerschalenhälften 1.1, 1.2, siehe die Figur 3), welcher mit 18 beziffert ist, ist um eine Exzentrizität d gegenüber dem Mittelpunkt 19 der Lagerschale 1 und damit auch gegenüber der Teilfugenebene 8 verschoben. Zugleich ist jeder Mittelpunkt 18 der Kreissegmente des Flächensegments 14 beziehungsweise gemeinsam gebildet durch das zweite und das dritte Flächensegment 15, 16 um einen Versatz e relativ zu dem Mittelpunkt 19 der Lagerschale 1 verschoben, und zwar innerhalb der Versatzebene 17. Entsprechend der Radien R₁, R₂ ist auch der Versatz der Flächensegmente 15, 16 mit e₁ und der Versatz des Flächensegments 14 mit e₂ bezeichnet. Ebenso sind die Exzentrizität d₁ des zweiten und dritten Flächensegments 15, 16 und die Exzentrizität d₂ des ersten Flächensegments 14 beziffert.

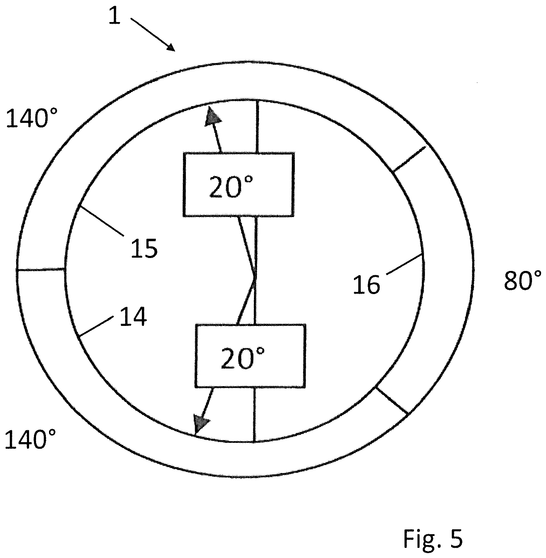

In der Figur 5 ist ein weiteres Ausführungsbeispiel für ein erfindungsgemäßes hydrodynamisches Gleitlager schematisch dargestellt. Bei diesem Ausführungsbeispiel sind ebenfalls drei in Umfangsrichtung der Lagerschale 1 hintereinander angeordnete, mit ihrem inneren Umfang jeweils ein Kreissegment ausbildende Flächensegmente 14, 15, 16 vorgesehen, wobei abweichend vom vorherigen Ausführungsbeispiel sich zwei Flächensegmente 14, 15 über jeweils 140° erstrecken und das verbleibende Flächensegment 16 sich über 80° erstreckt. Insbesondere sind die sich über 140° erstreckenden Flächensegmente 14, 15 kleiner profiliert als das sich über 80° erstreckende Flächensegment 16. Somit ist es möglich, dass die sich über den größeren Winkel erstreckenden Flächensegmente 14, 15 eine höhere Tragkraft aufweisen als das verbleibende Flächensegment 16, das jedoch besonders zur Stabilität des Lagers beiträgt. Das Lager ist insbesondere für alle Betriebspunkte geeignet, sodass kein Lagerwechsel erforderlich ist. Optional können vorteilhaft Ölbohrungen beziehungsweise Kühlbohrungen in den sich über 140° erstreckenden Flächensegmenten 14, 15 vorgesehen sein, selbstverständlich jedoch zusätzlich oder alternativ auch in dem verbleibenden Flächensegment 16.

In dem gezeigten Ausführungsbeispiel sind zwei Hauptlastrichtungen eingetragen, die um 20° gegenüber einer Senkrechten winklig versetzt angeordnet sind. Jedoch könnten auch andere Hauptlastrichtungen vorgesehen sein. Das Lager ist insbesondere für beide Drehrichtungen gleichermaßen geeignet und kann beispielsweise als Lager für ein Stirnradgetriebe vorgesehen sein, wobei ein Ritzel und/oder ein Rad, die miteinander kämmen, angetrieben sein können.

Die Teilfuge ist in dem gezeigten Ausführungsbeispiel nicht im Einzelnen gezeigt.

Als Werkstoff für die hier in den Figuren gezeigten hydrodynamischen Gleitlager oder auch andere erfindungsgemäß ausgeführte Gleitlager kommt insbesondere CuCr1Zr in Betracht.

## Patentansprüche

1. Hydrodynamisches Gleitlager
1.1 mit einer Lagerschale (1), deren innere Oberfläche eine Lagerfläche (2) für eine umlaufende Welle (6) oder dergleichen ausbildet; wobei
1.2 die Lagerfläche (2) zur Ausbildung eines Lagers mit Mehrkeilbohrung eine Vielzahl von in Umfangsrichtung der Lagerschale (1) hintereinander angeordnete, mit ihrem inneren Umfang jeweils ein Kreissegment mit einem Radius R ausbildende Flächensegmente (14, 15, 16) aufweist, deren Mittelpunkt (18) des jeweiligen Kreissegments gegenüber einem Mittelpunkt (19) der Lagerschale (1) jeweils um eine Exzentrizität d verschoben ist; und
1.3 die Lagerschale (1) zwei Lagerschalenhälften (1.1, 1.2) aufweist, die sich jeweils über 180° der Lagerfläche (2) erstrecken und an einer Teilfuge (7) in einer Teilfugenebene (8) zusammengefügt sind;
**dadurch gekennzeichnet, dass**
1.4 wenigstens ein Flächensegment (14, 15, 16) entlang einer Versatzebene (17) mit einem Versatz e relativ zu dem Mittelpunkt (19) der Lagerschale (1) versetzt ist, wobei die Versatzebene (17) in Umfangsrichtung der Lagerschale (1) winklig auf der Teilfugenebene (8) steht.

2. Hydrodynamisches Gleitlager (1) gemäß Anspruch 1, **dadurch gekennzeichnet, dass** in die Lagerschale (1) eine Vielzahl von Ölbohrungen (10) eingebracht sind, die zumindest teilweise oder vollständig in Radialrichtung verlaufen und eine ölleitende Verbindung zwischen dem äußeren Umfang (3) der Lagerschale (1) und der Lagerfläche (2) herstellen.

3. Hydrodynamisches Gleitlager (1) gemäß Anspruch 2, **dadurch gekennzeichnet, dass** auf entgegensetzten Seiten der Lagerfläche (2) jeweils eine Ölbohrung (10) vorgesehen ist, die sich in der Teilfugenebene (8) entlang der Teilfuge (7) erstreckt.

4. Hydrodynamisches Gleitlager (1) gemäß einem der Ansprüche 2 oder 3, **dadurch gekennzeichnet, dass** eine, mehrere oder alle Ölbohrungen (10) eine Mündung in der Lagerfläche (2) aufweisen, die von einer in die Lagerfläche (2) eingebrachten Schmiertasche (11) umschlossen wird.

5. Hydrodynamisches Gleitlager (1) gemäß Anspruch 4, **dadurch gekennzeichnet, dass** die oder jede Versatzebene (17) außerhalb der Schmiertasche (11) der Ölbohrungen (10), die sich entlang der Teilfuge (7) erstrecken, verläuft.

6. Hydrodynamisches Gleitlager (1) gemäß einem der Ansprüche 4 oder 5, **dadurch gekennzeichnet, dass** die oder jede Ölbohrung (10) in Umfangsrichtung der Lagerfläche (2) jeweils in einer Mitte der sie umschließenden Schmiertasche (11) positioniert ist.

7. Hydrodynamisches Gleitlager (1) gemäß einem der Ansprüche 1 bis 6, **dadurch gekennzeichnet, dass** über dem Umfang der Lagerfläche (2) genau drei Ölbohrungen (10) vorgesehen sind.

8. Hydrodynamisches Gleitlager (1) gemäß einem der Ansprüche 1 bis 7, **dadurch gekennzeichnet, dass** ein Flächensegment (14) einen Umfangswinkel von 180° aufweist.

9. Hydrodynamisches Gleitlager (1) gemäß Anspruch 8, **dadurch gekennzeichnet, dass** ein zweites Flächensegment (15) einen Umfangswinkel von 110° bis 140°, insbesondere von 130° oder 120° aufweist, und ein drittes Flächensegment (16) einen Umfangswinkel von 40° bis 70°, insbesondere von 50° oder 60° aufweist.

10. Hydrodynamisches Gleitlager (1) gemäß einem der Ansprüche 8 oder 9, **dadurch gekennzeichnet, dass** nur eine Versatzebene (17) vorgesehen ist und entlang dieser das eine Flächensegment (14), das einen Umfangswinkel von 180° aufweist, gegenüber allen anderen Flächensegmenten (15, 16) gemeinsam oder, wenn nur zwei Flächensegmente vorgesehen sind, gegenüber dem zweiten Flächensegment, um einen Versatz von wenigstens e, insbesondere von 2 e versetzt ist.

11. Hydrodynamisches Gleitlager (1) gemäß einem der Ansprüche 1 bis 10, **dadurch gekennzeichnet, dass** ein Winkel in Umfangsrichtung zwischen der Teilfugenebene (8) und der Versatzebene (17) 10° bis 60° beträgt.

12. Hydrodynamisches Gleitlager (1) gemäß einem der Ansprüche 1 bis 11, **dadurch gekennzeichnet, dass** die Exzentrizitäten d senkrecht auf der Teilfugenebene (8) stehen.

## Claims

1. Hydrodynamic plain bearing
1.1 having a bearing shell (1), of which the inner surface forms a bearing surface (2) for a rotating shaft (6) or the like; wherein
1.2 the bearing surface (2), in order to form a bearing having a multi-wedge bore, has a multiplicity of surface segments (14, 15, 16), which are arranged in succession in the circumferential direction of the bearing shell (1) and which, by means of their inner circumference, each form a segment of a circle having a radius R, the center point (18) of the segment of a circle of each surface segment being shifted relative to a center point (19) of the bearing shell (1) by an eccentricity d; and
1.3 the bearing shell (1) has two bearing shell halves (1.1, 1.2), which each extend over 180° of the bearing surface (2) and are joined at a joint (7) in a joint plane (8);
**characterized in that**
1.4 at least one surface segment (14, 15, 16) is offset relative to the center point (19) of the bearing shell (1) by an offset e along an offset plane (17), wherein the offset plane (17) is at an angle to the joint plane (8) in the circumferential direction of the bearing shell (1).

2. Hydrodynamic plain bearing (1) according to Claim 1, **characterized in that** a multiplicity of oil bores (10) are formed in the bearing shell (1), which extend at least partially or completely in the radial direction and produce an oil-conducting connection between the outer circumference (3) of the bearing shell (1) and the bearing surface (2).

3. Hydrodynamic plain bearing (1) according to Claim 2, **characterized in that** an oil bore (10) is provided on each of the opposite sides of the bearing surface (2), said oil bores extending along the joint (7) in the joint plane (8).

4. Hydrodynamic plain bearing (1) according to either of Claims 2 and 3, **characterized in that** one, more, or all oil bores (10) has/have an outlet in the bearing surface (2), which outlet is surrounded by a lubrication pocket (11) formed in the bearing surface (2).

5. Hydrodynamic plain bearing (1) according to Claim 4, **characterized in that** the offset plane or each offset plane (17) extends outside the lubrication pocket (11) of the oil bores (10), which extend along the joint (7).

6. Hydrodynamic plain bearing (1) according to any one of Claims 4 or 5, **characterized in that** the oil bore or each oil bore (10) is positioned in the circumferential direction of the bearing surface (2) in a center of the lubrication pocket (11) surrounding said oil bore.

7. Hydrodynamic plain bearing (1) according to any one of Claims 1 to 6, **characterized in that** precisely three oil bores (10) are provided over the circumference of the bearing surface (2).

8. Hydrodynamic plain bearing (1) according to any one of Claims 1 to 7, **characterized in that** a surface segment (14) has a circumferential angle of 180°.

9. Hydrodynamic plain bearing (1) according to Claim 8, **characterized in that** a second surface segment (15) has a circumferential angle of 110° to 140°, in particular of 130° or 120°, and a third surface segment (16) has a circumferential angle of 40° to 70°, in particular of 50° or 60°.

10. Hydrodynamic plain bearing (1) according to either of Claims 8 and 9, **characterized in that** only one offset plane (17) is provided and along this the one surface segment (14) having a circumferential angle of 180° is offset by an offset of at least e, in particular of 2 e, relative to all other surface segments (15, 16) jointly, or, if only two surface segments are provided, relative to the second surface segment.

11. Hydrodynamic plain bearing (1) according to any one of Claims 1 to 10, **characterized in that** an angle in the circumferential direction between the joint plane (8) and the offset plane (17) is 10° to 60°.

12. Hydrodynamic plain bearing (1) according to any one of Claims 1 to 11, **characterized in that** the eccentricities d are perpendicular to the joint plane (8).

## Revendications

1. Palier lisse hydrodynamique
1.1 comprenant une coque de palier (1) dont la surface intérieure constitue une surface de palier (2) pour un arbre en rotation (6) ou similaire ;
1.2 la surface de palier (2), pour réaliser un palier avec un perçage à plusieurs clavettes, présentant une pluralité de segments de surface (14, 15, 16) disposés les uns derrière les autres dans la direction périphérique de la coque de palier (1), constituant avec leur périphérie intérieure à chaque fois un segment circulaire de rayon R, dont le centre (18) du segment de cercle respectif est à chaque fois décalé d'une excentricité d par rapport à un centre (19) de la coque de palier (1) ; et
1.3 la coque de palier (1) présentant deux moitiés de coque de palier (1.1, 1.2) qui s'étendent à chaque fois sur 180° de la surface de palier (2) et qui sont assemblées au niveau d'un joint de séparation (7) dans un plan de joint de séparation (8) ;
caractérisé en ce
1.4 qu'au moins un segment de surface (14, 15, 16) est décalé le long d'un plan de décalage (17) avec un décalage e par rapport au centre (19) de la coque de palier (1), le plan de décalage (10) dans la direction périphérique de la coque de palier (1) étant incliné par rapport au plan de joint de séparation (8).

2. Palier lisse hydrodynamique (1) selon la revendication 1, **caractérisé en ce qu'**une pluralité de perçages d'huile (10) sont pratiqués dans la coque de palier (1) lesquels s'étendent au moins en partie ou complètement dans la direction radiale et établissent une liaison d'écoulement d'huile entre la périphérie extérieure (3) de la coque de palier (1) et la surface de palier (2).

3. Palier lisse hydrodynamique (1) selon la revendication 2, **caractérisé en ce qu'**un perçage d'huile (10) est à chaque fois prévu sur des côtés opposés de la surface de palier (2), lequel s'étend dans le plan de joint de séparation (8) le long du joint de séparation (7).

4. Palier lisse hydrodynamique (1) selon l'une quelconque des revendications 2 ou 3, **caractérisé en ce qu'**un, plusieurs ou la totalité des perçages d'huile (10) présentent une embouchure dans la surface de palier (2), qui est entourée par une cavité de lubrification (11) réalisée dans la surface de palier (2).

5. Palier lisse hydrodynamique (1) selon la revendication 4, **caractérisé en ce que** le ou chaque plan de décalage (17) s'étend à l'extérieur de la cavité de lubrification (11) des perçages d'huile (10) qui s'étendent le long du joint de séparation (7).

6. Palier lisse hydrodynamique (1) selon l'une quelconque des revendications 4 ou 5, **caractérisé en ce que** le ou chaque perçage d'huile (17) est positionné dans la direction périphérique de la surface de palier (2) à chaque fois dans un centre de la cavité de lubrification (11) qui l'entoure.

7. Palier lisse hydrodynamique (1) selon l'une quelconque des revendications 1 à 6, **caractérisé en ce qu'**exactement trois perçages d'huile (10) sont prévus sur la périphérie de la surface de palier (2).

8. Palier lisse hydrodynamique (1) selon l'une quelconque des revendications 1 à 7, **caractérisé en ce qu'**un segment de surface (14) présente un angle périphérique de 180°.

9. Palier lisse hydrodynamique (1) selon la revendication 8, **caractérisé en ce qu'**un deuxième segment de surface (15) présente un angle périphérique de 110° à 140°, en particulier de 130° ou de 120°, et un troisième segment de surface (16) présente un angle périphérique de 40° à 70°, en particulier de 50° ou de 60°.

10. Palier lisse hydrodynamique (1) selon l'une quelconque des revendications 8 ou 9, **caractérisé en ce que** seulement un plan de décalage (17) est prévu et le long de celui-ci, ledit un segment de surface (14), qui présente un angle périphérique de 180°, par rapport à tous les autres segments de surface (15, 16) ensemble, ou lorsqu'il n'y a que deux segments de surface, par rapport au deuxième segment de surface, est décalé d'un décalage d'au moins e, en particulier de 2 e.

11. Palier lisse hydrodynamique (1) selon l'une quelconque des revendications 1 à 10, **caractérisé en ce qu'**un angle dans la direction périphérique entre le plan de joint de séparation (8) et le plan de décalage (17) vaut 10° à 60°.

12. Palier lisse hydrodynamique (1) selon l'une quelconque des revendications 1 à 11, **caractérisé en ce que** les excentricités d sont perpendiculaires au plan de joint de séparation (8) .
